# EUROPÄISCHE PATENTSCHRIFT

(11) **EP 2 945 724 B1**
(45) Veröffentlichungstag und Bekanntmachung des Hinweises auf die Patenterteilung: **25.09.2019**
(21) Anmeldenummer: 14700807.2
(22) Anmeldetag: 17.01.2014
(51) Int. Cl.: B01D 39/08, B01D 39/16

(54) **DRAINAGELAGE, MIT EINER SOLCHEN DRAINAGELAGE VERSEHENES FILTERMATERIAL UND FILTERELEMENT**
DRAINAGE LAYER, FILTER MATERIAL PROVIDED WITH SUCH A DRAINAGE LAYER AND FILTER ELEMENT
COUCHE DE DRAINAGE, MATÉRIAU FILTRANT POURVU D'UNE TELLE COUCHE DE DRAINAGE ET ÉLÉMENT FILTRANT

(30) Priorität: 19.01.2013 DE 102013000933
(43) Veröffentlichungstag der Anmeldung: 25.11.2015
(73) Patentinhaber: Hydac Filtertechnik GmbH, 66280 Sulzbach/Saar (DE)
(72) Erfinder: SCHWENDER, Matthias, 66459 Kirkel (DE)
(74) Vertreter: Bartels und Partner, Patentanwälte
(86) Internationale Anmeldenummer: PCT/EP2014/000121
(87) Internationale Veröffentlichungsnummer: WO 2014/111265

(56) Entgegenhaltungen:
- WO-A1-98/30315
- WO-A1-03/033100
- DE-A1-102007 040 892
- DE-A1-102010 025 218

## Beschreibung

Die Erfindung betrifft eine Drainagelage mit den Merkmalen im Oberbegriff von Anspruch 1.

Filtermaterialien zur Herstellung von austauschbaren Filterelementen in hydraulischen Anlagen sind in mannigfacher Ausgestaltung bekannt (US 2005/0269256 A1, US 2007/0175191 A1 etc.) und bestehen beispielsweise aus einem Filtervlies, vorzugsweise mehrlagig, mit einer Stützlage an einer, vorzugsweise jedoch an beiden Seiten (Anström- und/oder Abströmseite). Beim Durchströmen des Filtermaterials ergeben sich zum Teil beträchtliche Druckdifferenzen zwischen der Rohseite und der Reinseite.

Um diesen Druckdifferenzen und auch dynamischen Strömungskräften in dem Unfiltrat standhalten zu können, weisen die Filtermaterialien, aus denen entsprechende Filterelemente gefertigt sind, sogenannte Stützlagen auf. Solche Stützlagen oder Stützstrukturen unterliegen einer starken Druckwechselbelastung im Betrieb des Filterelementes. Bekannte Stützstrukturen können aus Metallgeweben, insbesondere Geweben aus Edelstahldrähten gebildet sein, die sich als besonders stabil erweisen. Im Stand der Technik sind solche Gewebe als Standardgewebe (DE 600 34 247 T2), auch in der Art einer sogenannten Leinwandbindung ausgeführt, wobei die Fäden immer abwechselnd über und dann wieder unter dem nächsten Faden verwebt sind. Bekannte Filtermaterialien mit derart ausgebildeten Stützlagen und Filterlagen werden den zu stellenden Anforderungen hinsichtlich möglichst hoher Fluiddurchlässigkeit bei hoher mechanischer Festigkeit nicht gerecht, selbst wenn außer Stützlagen und Filterlagen eine fluidführende Drainagelage in Form eines Gitters oder Gewebes sowohl auf der Fluid-Anals auch auf der -Abströmseite des Filtermaterials vorgesehen ist, oder wenn, um zu geringeren Strömungswiderständen zu gelangen, größere Maschenweiten oder gröbere Gitter vorgesehen sind. In den letzteren Fällen ergibt sich der Nachteil der geringeren Widerstandsfähigkeit gegen Druckwechselbelastungen im Betrieb.

Die DE 10 2010 025 218 A1 beschreibt ein Filtermaterial für Fluide, insbesondere für Hydraulikflüssigkeiten, das ein durchströmbares Filtermedium aufweist, das mehrlagig ausgebildet ist und mindestens eine Filterlage sowie mindestens eine Drainagelage aufweist, wobei für eine Vergrößerung der für das durchströmende Fluid gebildeten Strömungskanäle eine eine dreidimensionale Struktur bildende zusätzliche Drainagelage vorgesehen ist, wobei zwei benachbart zueinander, zumindest teilweise bogenförmig verlaufende Linienelemente zwischen zwei aufeinanderfolgenden Kreuzungsstellen einen Strömungsraum begrenzen, der seine größte Öffnungsweite zwischen zwei voneinander beabstandeten Scheitelpunkten der Bogenverläufe hat.

Filterelemente mit Filtermaterialien gehen darüber hinaus aus der US 2005/ 0269256 A1 und der US 2007/0175191 A1 hervor.

Im Hinblick auf diese Problematik liegt der Erfindung die Aufgabe zugrunde, eine Drainagelage zur Verfügung zu stellen, die trotz guter Strukturfestigkeit eine hohe Fluiddurchlässigkeit gewährleistet.

Erfindungsgemäß ist diese Aufgabe durch eine Drainagelage gemäß der Merkmalsausgestaltung des Patentanspruches 1 gelöst.

Gemäß dem Inhalt des Patentanspruchs 1 besteht eine wesentliche Besonderheit der Erfindung darin, dass an den Kreuzungsstellen, bei denen die bogenförmigen Linienelemente übereinanderliegend in Anlage miteinander sind, diese einen Winkel α einschließen, der sich innerhalb dieses einen Rapports in vorgebbaren Winkelgrenzen stetig ändert.

Es ist ferner vorgesehen, dass im Lagenverbund des Filtermaterials neben mindestens einer ersten Drainagelage, die auch aus einer Stützlage oder einem Stützgitter gebildet sein kann, für eine Vergrößerung der für das durchströmende Fluid gebildeten Strömungskanäle eine eine dreidimensionale Struktur bildende, zusätzliche Drainagelage vorgesehen ist. Eine zusätzliche dreidimensionale Struktur bewirkt zum einen die Schaffung zusätzlicher Strömungskanäle, was zu einer Verringerung des Differenzdruckes, insbesondere an der Abströmseite eines Filtermaterials führt, wo aufgrund einer Sternfaltung des Filtermaterials sehr enge Strömungskanäle entstehen. Zum anderen ergibt sich eine erhöhte Widerstandsfähigkeit gegen Druckwechselbelastungen aufgrund der Stabilisierung der Falten durch die Verringerung der Faltenabstände auch auf der Anströmseite des Filtermaterials, wie sie sich wegen des Vorhandenseins der zusätzlichen Drainagelage ergibt. Durch die gebildeten zusätzlichen Strömungskanäle der zusätzlichen weiteren Drainagelage sind die Faltenabstände der plissierten Filtermatte oder des plissierten Filtermediums verringert, was zu einer zusätzlichen Stabilisierung der Einzelfalten führt. Als besonders vorteilhaft hat es sich erwiesen, sofern die zusätzliche Drainagelage in flächiger Anlage mit einer benachbart angeordneten Drainagelage ist.

Eine weitere wesentliche Besonderheit der Erfindung darin, dass die für eine Vergrößerung der Fluiddurchströmung vorgesehene, eine dreidimensionale Struktur bildende Drainagelage mit den zum Einsatz kommenden Linienelementen, die das Netz oder Gitter für die Drainagelage ausbilden, zumindest teilweise einen bogenförmig geschwungenen Verlauf aufweisen. Hierdurch ist in erwünschter Weise eine besonders hohe Strukturfestigkeit für diese Drainagelage und mithin für das gesamte Filtermedium geschaffen und des Weiteren entstehen zusätzliche Strömungskanäle mit besonders großem Querschnitt, was zu einer Verringerung des Differenzdruckes, insbesondere an der Abströmseite des Filtermaterials führt, wo aufgrund der üblichen Sternfaltung des Filtermaterials sehr enge Strömungskanäle entstehen. Hierzu trägt auch mit bei, dass aufgrund des Bogenverlaufes eine Drallführung für das Fluid erreicht ist, was zu einem Energieeintrag führt mit verbesserter Durchströmung des Filtermaterials.

Zum anderen ergibt sich eine erhöhte Widerstandsfähigkeit gegen Druckwechselbelastungen aufgrund der Stabilisierung der Falten durch die Verringerung der Faltenabstände auf der Anströmseite des Filtermaterials, wie sie sich wegen des Vorhandenseins der Drainagelage mit den geschwungenen, drallförmigen Bogengängen für die Linienelemente ergibt.

Vorzugsweise ist vorgesehen, dass der genannte Strömungsraum zwischen zwei benachbarten Bogenverläufen der Linienelemente näherungsweise kreisförmig, elliptisch oder in der Art einer Raute gebildet ist. Hierdurch lässt sich ein besonders guter Kompromiss hinsichtlich guter Festigkeitseigenschaften und hoher Fluiddurchlässigkeit realisieren, wobei die Strömungsräume einzelne Strömungskanäle ausbilden, die von den Linienelementen begrenzt eine optimale, drallförmige Strömungsführung innerhalb eines Filterelementes ermöglichen, das mit dem erfindungsgemäßen Filtermaterial ausgestattet ist.

Besonders bevorzugt ist des Weiteren vorgesehen, dass zumindest eine Stützlage aus linienförmigen Gitter- oder Netzelementen gebildet ist, die einzelne Durchlassöffnungen randseitig begrenzen. Mit den bogenförmigen Verläufen der linienförmigen Elemente der Drainagelage ist dann insoweit eine besonders gute Abstützung für das gesamte Filtermaterial oder Filtermedium erreicht. Insoweit übernimmt die jeweilige Stützlage die Funktion einer üblichen ersten Drainagelage, die mit der zusätzlichen Drainagelage, vorzugsweise bei flächiger Anlage zusammenwirkt.

Weitere vorteilhafte Ausgestaltungen des erfindungsgemäßen Filtermaterials sind Gegenstand der sonstigen Unteransprüche.

Gemäß dem Inhalt des Patentanspruches 14 ist Gegenstand der Erfindung auch ein Filterelement, das zur Benutzung bei einer Filtervorrichtung für Fluid, insbesondere für Hydraulikflüssigkeit vorgesehen ist und das ein Filtermaterial nach einem der Patentansprüche 2 bis 13 aufweist oder eine Drainagelage nach dem Patentanspruch 1.

Nachstehend ist die Erfindung anhand der Zeichnungen im Einzelnen erläutert. Es zeigen:
- Fig. 1: in teilweise aufgeschnittener, schematisch vereinfachter Darstellung den oberen Teil eines Filterelementes mit einem Filtermaterial gemäß dem Stand der Technik;
- Fig. 2: eine vergrößerte Draufsicht eines Teilbereiches eines Filtermaterials gemäß dem Stand der Technik;
- Fig. 3: eine der Fig. 2 ähnliche Draufsicht eines Filtermaterials gemäß einem Ausführungsbeispiel der Erfindung;
- Fig. 4: eine vergrößerte, perspektivische Schrägansicht lediglich eines an Faltenrücken angrenzenden Teilbereiches des Filtermaterials gemäß dem Ausführungsbeispiel von Fig. 3; und
- Fig. 5: eine der Fig. 3 ähnliche Draufsicht eines zweiten Ausführungsbeispiels des Filtermaterials.

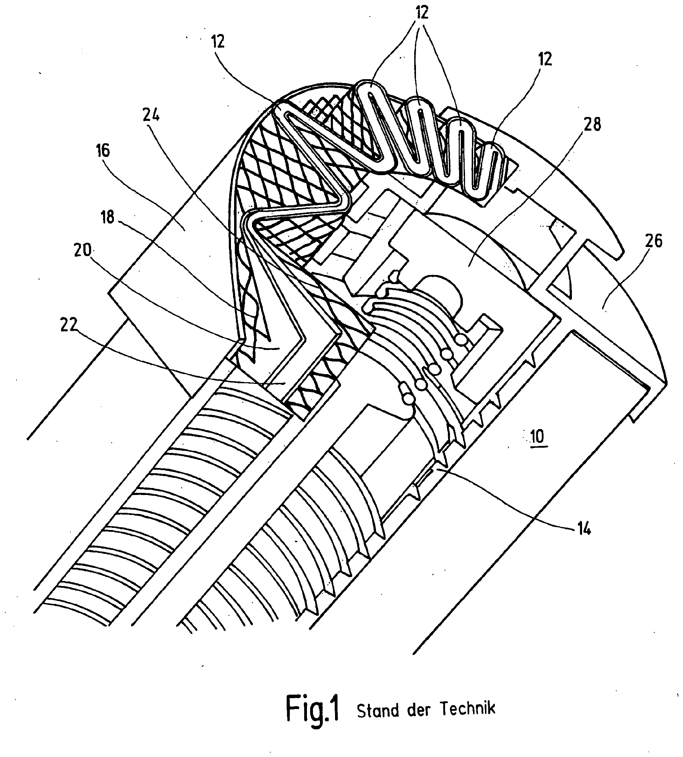

Das in der Fig. 1 teilweise dargestellte Filterelement, wie es zum Stand der Technik zählt, weist als Filtermaterial eine Filtermatte 10 mit einer vorgebbaren Flächenausdehnung und vorgebbaren Filtereigenschaften auf. Die Filtermatte 10 ist, wie in der Fig. 1 dargestellt, plissiert, mit einzelnen Filterfalten 12, die in dichter Packungsfolge sich zwischen einem inneren fluiddurchlässigen Stützrohr 14 sowie zwischen einem äußeren zylindrischen Gehäusemantel 16 erstrecken, der gleichfalls fluiddurchlässig ist. Der besseren Darstellung wegen sind die einzelnen Filterfalten 12 teilweise auseinandergezogen dargestellt, und der Einzellagenaufbau der plissierten Filtermatte 10 ergibt sich aus der dem Betrachter zugewandten Teildarstellung. Die Filterfalten 12 bilden eine W- oder V-Form aus und begrenzen zwischen sich Fluidzwischenräume, die zur nach außen hin gerichteten Anströmseite sich vom Volumen her vergrößern.

Bei derart aufgebauten Filterelementen besteht die Filtermatte 10 üblicherweise aus einer ersten Stützlage 18, einer zweiten Lage 20 als Schutzvlies, einer dritten Lage 22 als Hauptvlies oder Filterlage, gegebenenfalls einer weiteren, nicht dargestellten Lage eines sich ebenfalls anschließenden Schutzvlieses oder weiteren Filterlage und jedenfalls einer vierten Lage einer erneuten, innenumfangsseitig verlaufenden Stützlage 24. Die genannten Stützlagen 18, 24 können unter anderem aus einem Drahtgewebe, einem Kunststoffgitter oder einem Kunststoffgewebe bestehen. Eine der Lagen kann zusätzlich als Drainagelage eingesetzt sein. Die Schutzvlieslagen 20 bestehen regelmäßig aus einem Kunststoffvlies, und die Hauptvlies- oder Filterlagen 22 besteht aus Materialien, wie Glasfaserpapier, synthetischem Filtermaterial (Melt-Blown-Fasern), Zellulosepapier oder dergleichen. Die genannten Lagen können auch aus sogenannten Compositematerialien gleicher oder verschiedener Art aufgebaut sein. In Abhängigkeit vom Lagenaufbau und der jeweils eingesetzten Filtermaterialien weist die Filtermatte 10 vorgebbare Filtereigenschaften auf, die sich an der Filtrationsaufgabe orientieren, wobei grundsätzlich eine hohe Differenzdruckstabilität gewünscht ist, ebenso wie eine hohe Beta-Stabilität über einen weiten Differenzdruckbereich, sowie vorgebbare Filterfeinheiten, wobei zur Verringerung des Differenzdruckes am Filterelement ausreichend Strömungskanäle zur Verfügung stehen sollen, gleichzeitig jedoch eine gute Widerstandsfähigkeit gegen wechselnde Druckbelastungen gewährleistet sein soll.

In Blickrichtung auf die Fig. 1 gesehen, wird bei dem bekannten Filterelement die Filtermatte 10 von außen (Anströmseite) nach innen (Abströmseite) durchströmt und stützt sich innenumfangseitig mit ihren betreffenden Faltenumlenkungen am Außenumfang des Stützrohres 14 mit seinen ringförmigen Durchlässen ab. Es besteht aber auch die Möglichkeit, dass anders aufgebaute Filterelemente in umgekehrter Richtung vom abzureinigenden Fluid durchströmt werden, so dass die vorstehend genannte Anströmseite zur Abströmseite wird und umgekehrt. Die Filtermattenenden sind jeweils in einer Endkappe aufgenommen, wobei in der Fig. 1 nur die obere Endkappe 26 teilweise dargestellt ist, die im Übrigen ein federbelastetes Bypassventil 28 umfasst, das aus Sicherheitsgründen einen Fluiddurchlass ermöglicht, auch wenn die Filtermatte 10 von Verschmutzungen zugesetzt ist, also verblockt sein sollte.

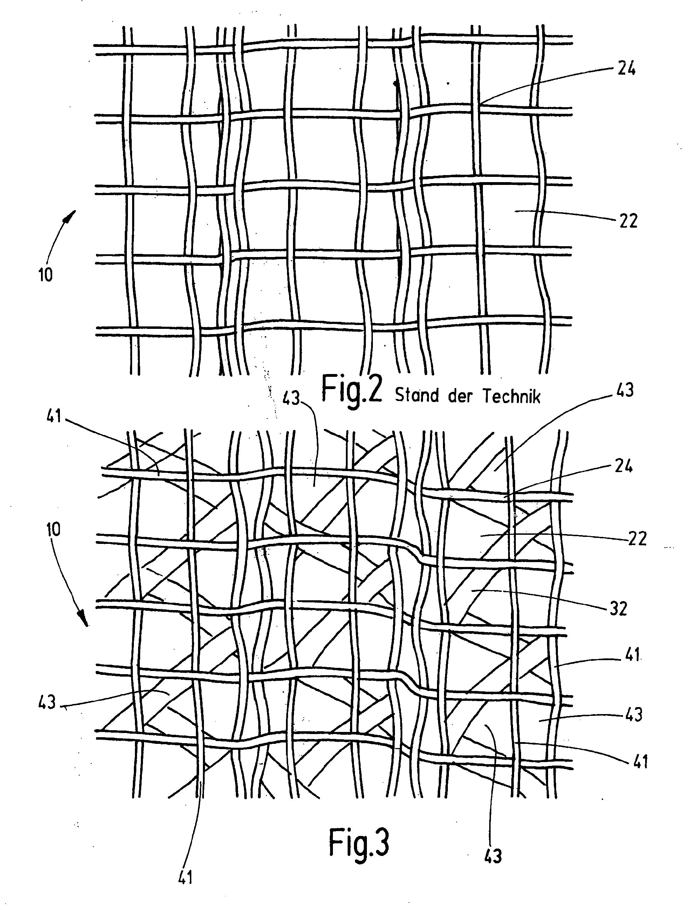

Die Fig. 2 zeigt eine Draufsicht eines Filtermaterials in Form einer Filtermatte 10 gemäß dem Stand der Technik mit einer standardgemäßen Stützlage 24, die durch ein metallisches Gitter gebildet ist. Ein solches Gitter dient, gegebenenfalls mit einer weiteren, innenliegenden Stützlage, die in Fig. 2 nicht sichtbar ist, als Drainagelage, um Strömungskanäle für den Durchstrom des Fluids zu schaffen.

Das in Fig. 3 gezeigte Ausführungsbeispiel des erfindungsgemäßen Filtermaterials unterscheidet sich demgegenüber darin, dass für eine zusätzliche Drainagefunktion durch Bildung vergrößerter Strömungskanäle eine Drainagelage 32 vorgesehen ist, die auch als zusätzliche Drainagelage 32 bezeichnet ist. Um solche zusätzlichen Strömungskanäle im Bereich der Abströmseite der Filtermatte 10 zur Verfügung zu stellen, ist bei dem Ausführungsbeispiel von Fig. 3, wo die Abströmseite der Filtermatte 10 sichtbar ist, die Drainagelage 32 unmittelbar unterhalb der äußeren Stützlage 24 vorgesehen. Diese Drainagelage 32 ist, um Freiräume zu schaffen, ein dreidimensionales Strukturelement, und im vorliegenden Beispiel ist eine gitterartige Struktur aus Kunststoff vorgesehen, beispielsweise aus Polybuthylenterefthalat, Polypropylen oder Polyester. Ebenfalls kann ein metallisches Gewebe oder Kunststoffgewebe vorgesehen sein, das eine elektrische Spannungsableitung ermöglichen kann.

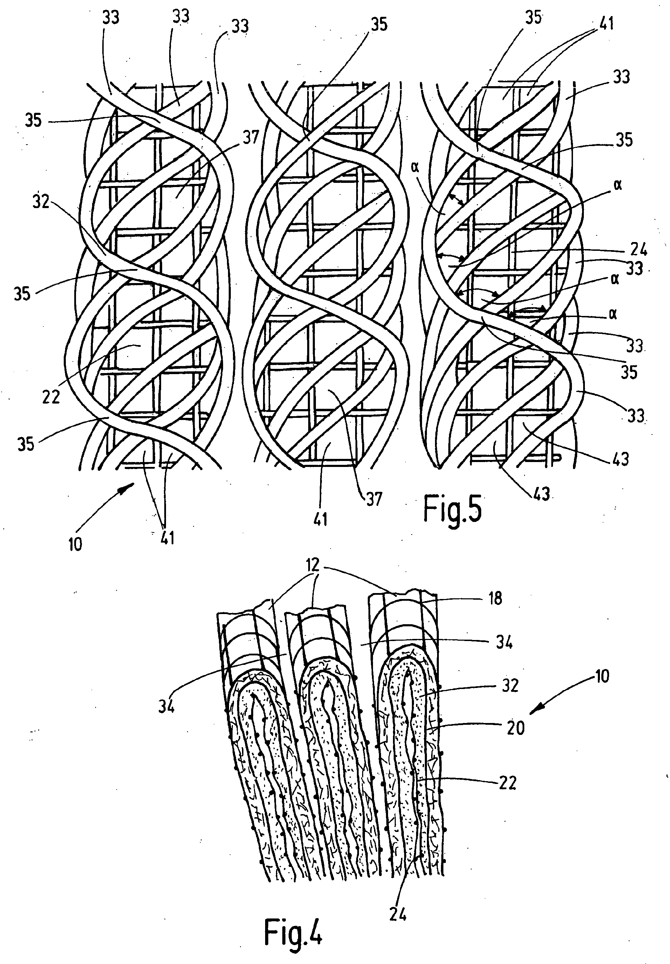

Die Drainagelage 32, die beim Ausführungsbeispiel von Fig. 3 und 4 innenliegend angeordnet ist, liefert, zusätzlich zur Drainagewirkung, einen Beitrag zur Faltenstabilisierung. Wie der Fig. 4 entnehmbar ist, führt das zusätzliche Volumen der ein dreidimensionales Gebilde darstellenden Drainagelage 32 zu einer engeren Aneinanderlage der Filterfalten 12 mit geringeren Abständen 34 (siehe Fig. 4) an den Faltenrücken der Anströmseite. Die zusätzliche Drainagelage 32 bildet daher auch eine weitere Stützlage für die Filtermatte 10 aus.

Bei dem Ausführungsbeispiel von Fig. 5 ist die Drainagelage 32 als äußere Lage an der Abströmseite der Filtermatte 10 angeordnet. Bei dem gezeigten Beispiel ist die Drainagelage 32 durch eine unregelmäßige Gitterstruktur aus Kunststoff gebildet. Bei der Anordnung an der Abströmseite der Filtermatte 10, wo sich aufgrund der Sternfaltung (Plissierung) sehr enge Strömungskanäle ergeben, liefert die Drainagelage 32 einen besonders wirkungsvollen Beitrag zur Verminderung des Strömungswiederstandes und damit der im Betrieb entstehenden Differenzdrücke.

Wie insbesondere die Fig. 5 zeigt, sind jedenfalls die Linienelemente 33 der Drainagelage 32 mit einem bogenförmig geschwungenen Verlauf versehen. Insbesondere ist der bogenförmige Verlauf innerhalb eines Rapportes, bei dem sich das Bindungsmuster wiederholt, in der Art von S-förmigen Linienelementen 33 ausgebildet. Zwei benachbart zueinander bogenförmig verlaufende Linienelemente 33 begrenzen zwischen zwei aufeinanderfolgenden Kreuzungsstellen 35 einen Strömungsraum 37, der seine größte Öffnungsweite zwischen zwei voneinander beabstandeten Scheitelpunkten 39 der Bogenverläufe hat. Der derart gebildete Strömungsraum 37 zwischen zwei benachbarten Bogenverläufen der Linienelemente 33 ist dabei näherungsweise in der Art einer Ellipse oder einer Raute ausgebildet.

Ferner ist vorgesehen, dass an den Kreuzungsstellen 35, bei denen die bogenförmigen Linienelemente 33 übereinanderliegend in Anlage miteinander sind, diese jeweils einen Winkel α einschließen, der innerhalb eines Rapports sich stetig in vorgebbaren Winkelgrenzen ändert, insbesondere in Blickrichtung auf die Fig. 5 gesehen nach unten hin stetig zunimmt.

Die darunter liegend angeordnete Stützlage 18 oder 24 ist aus linienförmigen Gitter- oder Netzelementen 41 gebildet, die einzelne Durchlassöffnungen 43 für das Fluid randseitig begrenzen. Dabei sind die Durchlassöffnungen 43 der jeweiligen Stützlagen 18, 24 rechteck- oder rautenförmig ausgebildet; im gezeigten Ausführungsbeispiel nach der Fig. 5 in der Art eines Rechtecks.

Die Strömungsräume 37 der Drainagelage wiederum sind in der Art von kanalartigen Strömungsführungen konzipiert, die von den bogenförmig verlaufenden Linienelementen 33 randseitig zumindest teilweise begrenzt sind. Dergestalt entstehen drallförmig gebildete Strömungskanäle, die für einen verbesserten Fluideintritt in die sonstigen Lagen des Filtermaterials einschließlich seiner jeweiligen Stützlage 18, 24 sorgen. Besonders bevorzugt ist dabei vorgesehen, dass die Strömungsräume 37 der Drainagelage 32 vom freien Durchflussquerschnitt her gleich oder vorzugsweise größer, besonders bevorzugt doppelt so groß, dimensioniert sind als die Durchflussöffnungen 43 der darunter liegenden Stützlage 18 oder 24.

Die einzelnen netzförmig miteinander verbundenen Linienelemente 33; 41 von Drainagelage 32 bzw. der jeweiligen Stützlage 18 oder 24 sind als Filamente, Fäden, Garne oder Fasern aus Kunststoff- und/oder Metallmaterialien ausgebildet und Bestandteil eines Siebes, Geflechtes, Gewirkes, Gewebes oder wie dargestellt in Form eines netzartigen Gitters.

Wie bereits dargelegt, kann die Drainagelage 32 sich unmittelbar an einem zuordenbaren Stützgitter 18 oder 24 abstützten, indem die Linienelemente 33; 41 zumindest teilweise in unmittelbarer Anlage miteinander sind. Es ist aber ebenso möglich, die Drainagelage 32 zwischen zwei anderen Lagen, vorzugsweise zwischen einer weiteren Drainagelage (nicht dargestellt) im Lagenverbund und einer der Stützlagen 18, 24 anzuordnen. Insbesondere kann auch vorgesehen sein, die Drainagelage 32 nicht nur abströmseitig innerhalb des Filtermaterials anzuordnen, sondern vielmehr auch anströmseitig. Besonders bevorzugt ist jedoch die Drainagelage 32 auf der Abströmseite vor der inneren weiteren Stützlage 24 angeordnet, wobei die dahingehende Drainagelage 32 auch zuäußerst in Anströmrichtung vor der ersten Stützlage 18 zusätzlich oder alternativ angeordnet sein kann.

Die angesprochene Drainagelage 32 kann wie vorstehend dargelegt mit dem dort beschriebenen Filtermaterial kombiniert zu einem Filterelement gemäß der Darstellung nach der Fig. 1 zusammengesetzt werden. Es besteht aber auch die Möglichkeit, die Drainagelage 32 als eigenständiges Bauteil mit anderen Filtermedien oder Filtermaterialien, auch in nicht plissierter Form für eine Fluidfiltration, auch in Form der Getränkefiltration zu verwenden.

## Patentansprüche

1. Drainagelage die unter Bildung einer Netz- oder Gitterstruktur aus einzelnen Linienelementen (33) besteht, wobei die einzelnen Linienelemente (33) zumindest teilweise einen bogenförmig geschwungenen Verlauf aufweisen, wobei zwei benachbart zueinander, zumindest teilweise bogenförmig verlaufende Linienelemente (33) zwischen zwei aufeinanderfolgenden Kreuzungsstellen (35) einen Strömungsraum (37) begrenzen, der seine größte Öffnungsweite zwischen zwei voneinander beabstandeten Scheitelpunkten (39) der Bogenverläufe hat, **dadurch gekennzeichnet, dass** an den Kreuzungsstellen (35), bei denen die bogenförmigen Linienelemente (33) übereinanderliegend in Anlage miteinander sind, diese einen Winkel (α) einschließen, der sich innerhalb dieses einen Rapports in vorgebbaren Winkelgrenzen stetig ändert.

2. Filtermaterial für ein Fluid, insbesondere in Form einer Hydraulikflüssigkeit, das ein durchströmbares Filtermedium (10) aufweist, das mehrlagig ausgebildet ist und mindestens eine Filterlage (20) aufweist, wobei für eine Vergrößerung der für das durchströmende Fluid gebildeten Strömungskanäle eine eine dreidimensionale Struktur bildende Drainagelage (32) gemäß Anspruch 1 vorgesehen ist.

3. Filtermaterial nach Anspruch 2, **dadurch gekennzeichnet, dass** der Strömungsraum (37) zwischen zwei benachbarten Bogenverläufen der Linienelemente (33) näherungsweise, kreisförmig, elliptisch oder in der Art einer Raute gebildet ist.

4. Filtermaterial nach Anspruch 2 oder 3, **dadurch gekennzeichnet, dass** zumindest eine Stützlage (18, 24) aus linienförmigen Gitter- oder Netzelementen (41) gebildet ist, die einzelne Durchlassöffnungen (43) für das Fluid randseitig begrenzen und die jeweils eine weitere Drainagelage ausbilden.

5. Filtermaterial nach Anspruch 4, **dadurch gekennzeichnet, dass** die Durchlassöffnungen (43) der jeweiligen Stützlagen (18, 24) rechteck- oder rautenförmig ausgebildet sind.

6. Filtermaterial nach einem der Ansprüche 2 bis 5, **dadurch gekennzeichnet, dass** die Strömungsräume (37) in der Art von kanalartigen Strömungsführungen konzipiert sind, die von den bogenförmig verlaufenden Linienelementen (33) randseitig zumindest teilweise begrenzt sind.

7. Filtermaterial nach einem der Ansprüche 4 bis 6, **dadurch gekennzeichnet, dass** die Strömungsräume (37) der Drainagelage (32) vom freien Durchflussquerschnitt her gleich oder vorzugsweise größer, besonders bevorzugt doppelt so groß, dimensioniert sind als die Durchflussöffnungen (43) der jeweiligen Stützlage (18, 24).

8. Filtermaterial nach einem der Ansprüche 2 bis 7, **dadurch gekennzeichnet, dass** die einzelnen netzförmig miteinander verbundenen Linienelemente (33; 41) von Drainagelage (32) und/oder Stützlage (18, 24) als Filamente, Fäden, Garne oder Fasern aus Kunststoff- und/oder Metallmaterialien ausgebildet, Bestandteil eines Siebes, Geflechtes, Gewirkes, Gewebes oder Gitters sind.

9. Filtermaterial nach einem der Ansprüche 4 bis 8, **dadurch gekennzeichnet, dass** die Drainagelage (32) sich unmittelbar an einem zuordenbaren Stützgitter (18, 24) abstützt, indem die Linienelemente (33; 41) zumindest teilweise in unmittelbarer Anlage miteinander sind.

10. Filtermaterial nach einem der Ansprüche 2 bis 9, **dadurch gekennzeichnet, dass** die Drainagelage (32) zwischen zwei anderen Lagen, vorzugsweise zwischen einer weiteren Drainagelage im Lagenverbund und einer der Stützlagen (18, 24), angeordnet ist.

11. Filtermaterial nach einem der Ansprüche 2 bis 10, **dadurch gekennzeichnet, dass** die Drainagelage (32) mit den bogenförmig verlaufenden Linienelementen (33) als eine äußere, anströmseitige Lage des Lagenverbundes angeordnet ist.

12. Filtermaterial nach einem der Ansprüche 4 bis 11, **dadurch gekennzeichnet, dass** der Durchmesser für die einzelnen Linienelemente (33) der Drainagelage (32) größer gewählt ist als der Durchmesser der linienförmigen Gitter- oder Netzelemente (41) für die jeweilige Stützlage (18, 24).

13. Filtermaterial nach einem der Ansprüche 2 bis 12, **dadurch gekennzeichnet, dass** der Lagenaufbau in der Durchströmungsrichtung des Fluids durch das Filtermedium (10) von außen nach innen gesehen folgenden Aufbau hat:
- zusätzliche Drainagelage (32),
- mindestens eine benachbart angeordnete Drainagelage und/ oder Stützlage (18),
- mindestens eine Filterlage (20),
- mindestens eine weitere Drainagelage und/oder alternativ zu dieser weiteren Drainagelage mindestens eine weitere Stützlage (24).

14. Filterelement, das zur Benutzung bei einer Fluidvorrichtung für Fluide, insbesondere für Hydraulikflüssigkeiten vorgesehen ist und ein Filtermaterial nach einem der Patentansprüche 2 bis 13 oder eine Drainagelage nach Patentanspruch 1 aufweist.

## Claims

1. Drainage layer, which, with the formation of a network or grid structure, consists of individual line elements (33), wherein the individual line elements (33) exhibit at least in part a curved slewed course, wherein two adjacent at least in part curved-course line elements (33) delimit, between two sequential crossing points (35) a flow space (37), which has its largest opening width between two interspaced crest points (39) of the curved courses, **characterised in that,** at the crossing points (35), at which the curved line elements (33) are in contact above one another, they enclose an angle (α), which constantly changes within this relationship within predeterminable angle limits.

2. Filter material for a fluid, in particular in the form of a hydraulic fluid, which comprises a flow-permeable filter medium (10) which is configured as multilayered and comprises at least one filter layer (20), wherein, for an enlargement of the flow channels formed for the fluid flowing through, a drainage layer (32) according to claim 1 is provided, forming a three-dimensional structure.

3. Filter material according to claim 2, **characterised in that** the flow chamber (37) between two adjacent curved courses of the line elements (33) are configured as approximately circular, elliptical, or in the form of a rhombus.

4. Filter material according to claim 2 or 3, **characterised in that** at least one support layer (18, 24) is formed from lattice or network elements (41), which on the edge side delimit the individual passage openings (43) for the fluid, and which in each case form a further drainage layer.

5. Filter material according to claim 4, **characterised in that** the passage openings (43) of the respective support layers (18, 24) are configured as rectangular or rhomboidal.

6. Filter material according to any one of the preceding claims 2 to 5, **characterised in that** the flow spaces (37) are designed in the from of flow guides of channel type, which on the edge side are at least partially delimited by the curved course line elements (33).

7. Filter material according to any one of the preceding claims 4 to 6, **characterised in that** the flow chambers (37) of the drainage layer (32) are, from the free throughflow cross-section, dimensioned as equal or preferably larger, for particular preference twice as large, as the throughflow openings (43) of the respective support layer (18, 24).

8. Filter material according to any one of the preceding claims 2 to 7, **characterised in that** the individual line elements (33; 41), connected in network form, of the drainage layer (32) and/or support layer (18, 24), are formed as filaments, threads, yarns, or fibres of plastic and/or metal materials, and are constituent parts of a screen, braid, knit, fabric, or lattice.

9. Filter material according to any one of the preceding claims 4 to 8, **characterised in that** the drainage layer (32) is supported directly on an assigned support network (18, 24), **in that** the line elements (33; 41) are at least partially in direct contact with one another.

10. Filter material according to any one of the preceding claims 2 to 9, **characterised in that** the drainage layer (32) is arranged between two other layers, preferably between a further drainage layer in the layer composite and one of the support layers (18, 24).

11. Filter material according to any one of the preceding claims 2 to 10, **characterised in that** the drainage layer (32) with the curved line elements (33) is arranged as an outer inflow side layer of the layer composite.

12. Filter material according to any one of the preceding claims 4 to 11, **characterised in that** the diameter of the individual line elements (33) of the drainage layer (32) is selected as larger than the diameter of the linear lattice or network elements (41) for the respective support layer (18, 24).

13. Filter material according to any one of the preceding claims 2 to 12, **characterised in that** the layer structure in the throughflow direction of the fluid through the filter medium (10), seen from the outside, has the following structure:
- Additional drainage layer (32),
- at least one adjacently arranged drainage layer and/or support layer (18),
- at least one filter layer (20),
- at least one further drainage layer and/or, as an alternative to this further drainage layer, at least one further support layer (24).

14. Filter element, which is provided for use with a fluid device for fluids, in particular for hydraulic fluids, and a filter material according to any one of claims 2 to 13, or comprises a drainage layer according to claim 1.

## Revendications

1. Couche de drainage qui est constituée d'éléments (33) linéaires individuels en formant une structure en filet ou en grille, les éléments (33) linéaires individuels ayant un tracé incurvé au moins en partie en forme d'arc, deux éléments (33) linéaires, voisins l'un de l'autre et s'étendant au moins en partie en forme d'arc, délimitant, entre deux points (35) de croisement successifs, un espace (37) d'écoulement, qui a son ouverture la plus grande entre deux points (39) culminants à distance l'un de l'autre des tracés en arc, **caractérisée en ce que**, aux points (35) de croisement où les éléments (33) linéaires en forme d'arc sont entre eux en contact à superposition, ceux-ci font un angle (α) qui se modifie constamment dans un rapport dans des limites angulaires pouvant être données à l'avance.

2. Matériau filtrant pour un fluide, notamment sous la forme d'un liquide hydraulique, qui a milieu (10) filtrant pouvant être traversé et constitué de plusieurs couches et ayant au moins une couche (20) de filtration, dans lequel pour augmenter les canaux d'écoulement formés pour le fluide qui passe, il est prévu une couche (32) de drainage suivant la revendication 1 formant une structure tridimensionnelle.

3. Matériau filtrant suivant la revendication 2, **caractérisé en ce que** l'espace (37) d'écoulement entre deux tracés en arc voisins des éléments (33) linéaires est à peu près circulaire, elliptique ou formé à la manière d'un losange.

4. Matériau filtrant suivant la revendication 2 ou 3, **caractérisé en ce qu'**au moins une couche (18, 24) d'appui est formée d'éléments (41) de grille ou de filet linéaires, qui délimitent, du côté du bord, des ouvertures (43) individuelles de passage du fluide et qui constituent chacune une autre couche de drainage.

5. Matériau filtrant suivant la revendication 4, **caractérisé en ce que** les ouvertures (43) de passage des couches (18, 24) d'appui respectives sont constituées sous la forme de rectangle ou de losange.

6. Matériau filtrant suivant l'une des revendications 2 à 5, **caractérisé en ce que** les espaces (37) d'écoulement sont conçus à la manière de conduite d'écoulement de type en canal, qui sont délimitées, au moins en partie du côté du bord, par les éléments (33) linéaires s'étendant en forme d'arc.

7. Matériau filtrant suivant l'une des revendications 4 à 6, **caractérisé en ce que** les espaces (37) d'écoulement de la couche (32) de drainage sont dimensionnés, par la section transversale libre de passage, en étant égaux ou de préférence plus grands, d'une manière particulièrement préférée deux fois plus grands, que les ouvertures (43) de passage de la couche (18, 24) d'appui respective.

8. Matériau filtrant suivant l'une des revendications 2 à 7, **caractérisé en ce que** les éléments (33;41) linéaires individuels, reliés entre eux en forme de filet, de la couche (32) de drainage et/ou de la couche (18, 24) d'appui, sont constitués sous la forme de filaments, de fils, de filasses ou de fibres en matière plastique et/ou en métal, en faisant partie d'un tamis, d'un treillis, d'un tissu à maille, d'un tissu ou d'une grille.

9. Matériau filtrant suivant l'une des revendications 4 à 8, **caractérisé en ce que** la couche (32) de drainage s'appuie directement sur une grille (18, 24) d'appui pouvant être associée, par le fait que les éléments (33;41) linéaires sont au moins en partie en contact direct entre eux.

10. Matériau filtrant suivant l'une des revendications 2 à 9, **caractérisé en ce que** la couche (32) de drainage est disposée entre deux autres couches, de préférence entre une autre couche de drainage du composite de couches et l'une des couches (18, 24) d'appui.

11. Matériau filtrant suivant l'une des revendications 2 à 10, **caractérisé en ce que** la couche (32) de drainage est disposée, par les éléments (33) linéaires s'étendant en forme d'arc, sous la forme d'une couche extérieure du côté d'afflux du composite de couches.

12. Matériau filtrant suivant l'une des revendications 4 à 11, **caractérisé en ce que** le diamètre des éléments (33) linéaires individuels de la couche (32) de drainage est choisi plus grand que le diamètre des éléments (41) linéaires de grille ou de filet de la couche (18, 24) d'appui respective.

13. Matériau filtrant suivant l'une des revendications 2 à 12, **caractérisé en ce que** la structure de couches dans le sens de passage du fluide dans le milieu (10) filtrant, considéré de l'extérieur à l'intérieur, a la structure suivante :
- une couche (32) de drainage supplémentaire,
- au moins une couche de drainage et/ou une couche (18) d'appui montée au voisinage,
- au moins une couche (20) de filtration,
- au moins une autre couche de drainage et/ou en variante à cette autre couche de drainage au moins une autre couche (24) d'appui.

14. Elément de filtre, prévu pour être utilisé dans une installation pour des fluides, notamment pour des liquides hydrauliques, et ayant un matériau de filtre suivant l'une des revendications 2 à 13 ou une couche de drainage suivant la revendication 1.
